# EUROPEAN PATENT APPLICATION

(11) **EP 1 481 816 A2**
(43) Date of publication of application: **01.12.2004**
(21) Application number: 04380119.0
(22) Date of filing: 28.05.2004
(51) Int. Cl.: B42D 15/02, B42D 15/04

(54) **Video-postcard**

(30) Priority: 30.05.2003 ES 200301342
(71) Applicant: Ahrend, Erik, 38687 Tenerife, Islas Canarias (ES)
(72) Inventor: Ahrend, Erik, 38687 Tenerife, Islas Canarias (ES)
(74) Representative: Temino Ceniceros, Ignacio

(57) **Abstract**

The purpose of this invention is to obtain a considerable increase in the amount of visual or graphic information, and also to accompany this with acoustic information, by incorporating into the postcard an informative video recording. It consists of a sheet of card which shows a photograph or a group of photographs of a certain place on the front, and on the back there is a specific place that indicates to the sender exactly where the name and address of the person who is to receive the card has to be put, the place where the stamp(s) have to be stuck, plus an area which is to be used for writing the text, in the form of a letter.

## Description

### OBJECT OF THE INVENTION

This invention is a postcard, that is to say, it is a card that is to be sent by mail. To be specific, it is of the type that shows a photograph or several photographs of a certain place, of the kind that tourists or holidaymakers generally send people, with small pictures that depict the places that the sender is visiting.

The purpose of this invention is to obtain a considerable increase in the amount of visual or graphic information, and also to accompany this with acoustic information, by incorporating into the postcard an informative video recording.

### BACKGROUND TO THE INVENTION

Since time immemorial, the use of postcards has been general and widespread.

These cards consist of a sheet of card which shows a photograph or a group of photographs of a certain place on the front, and on the back there is a specific place that indicates to the sender exactly where the name and address of the person who is to receive the card has to be put, the place where the stamp(s) have to be stuck, plus an area which is to be used for writing the text, in the form of a letter.

The fact that there is very little room for this text means that it is generally used for a greeting and to say "goodbye", in such a way that the only information that the addressee receives about the place in question is what is shown in the photograph or photographs.

This lack of space means that at present it is not possible for the companies to make the most of these postcards by advertising on them, because there is no room for any adverts.

### DESCRIPTION OF THE INVENTION

The video-postcard invention that is proposed here overcomes the drawback explained above in a wholly satisfactory way, enabling the postcard to contain extensive information of both a graphic and oral nature, in addition to the usual photos that are shown on the front of the card, the contents also being supplementary to the pictures shown on the front of the card, for example by depicting and describing places that are of interest from a landscape perspective, the flora and fauna in the zone, accommodation, restaurants and hotels, etc, and even adverts for companies that provide services and/or products.

Therefore, in a more specific way and using a sheet of cardboard that is similar in appearance to a conventional postcard, the most distinctive characteristic of the video-postcard that constitutes the invention, is that the cardboard sheet is equipped with an extension that can be folded back towards the rear face of the card, in the form of a sort of small and practical envelope containing a small disc, which can either take the form of a Compact Disc, a DVD or any other type that might be suitable, and this disc contains all the information that has been referred to above.

When this postcard is commercialised, the person who is to receive it will thus not only be able to see the conventional photograph or photographs and the text written upon it by the sender of the card, but will also be able to insert the disc into a computer or DVD system and display or open up all the information contained on it.

### DESCRIPTION OF THE DRAWINGS

With a view to supplementing the description that is being given and to help to give greater insight into the characteristics of the invention in a way that is in keeping with a preferred embodiment of thereof, a set of drawings is enclosed as an essential part of that description, in which the following has been shown, by way of illustration; this set of drawings should not be regarded as exhaustive:

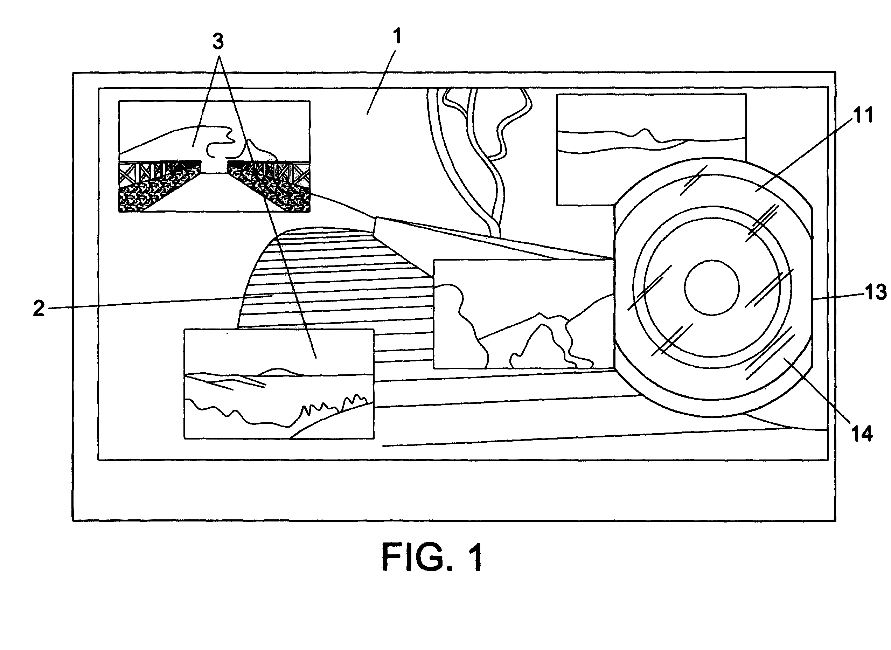

Figure 1.- This shows a frontal elevation of a video-postcard realised in a way that is consistent with purpose of this invention.
Figure 2.- This shows a view of the rear of the same video-postcard.
Figure 3.- Finally, this shows a detail of the cross section of the same video-postcard following the A - B line that can be seen in Figure 2.

### REALISATION OF A PREFERRED EMBODIMENT OF THE INVENTION

It can be seen from the figures that the video-postcard being proposed in the invention, just like a classic postcard, is made up of a cardboard sheet (1) that is sufficiently resistant, on the front of which there is a background photograph (2) in the example used for the figures, on which there is a series of smaller photographs (3), all of which are of a specific geographical location, for example, whereas the rear of the card has one area (4) given over to writing the text for the addressee, another zone (5) for the name of the receiver, postal address, etc., and a square (6), where the stamp is to be stuck.

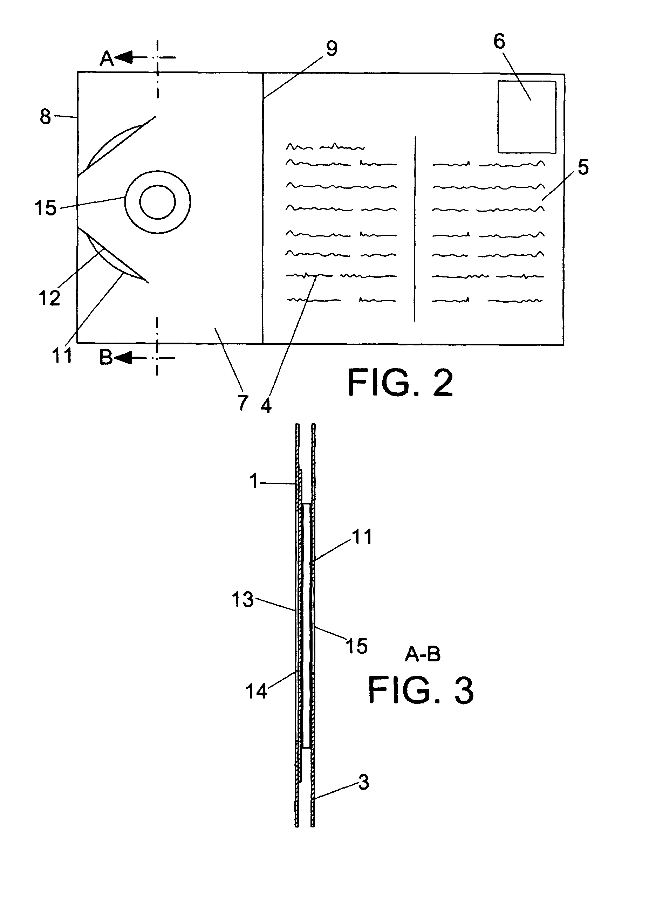

Now in the form of the invention, the sheet (1) that constitutes the postcard, is extended along one of its ends into a part (7) that folds back onto the rear face of the card, as can be seen especially in Figure 2, in such a way that this part (7), which remains joined to the main body of the card (1) by means of its folding edge (8), is attached to it by adhesive on the free edge (9), thereby forming a tubular and flat casing (10) for a disc (11), which is held in this casing (10) by means of two oblique cuts (12) in the partitioning device or rear extension (7), and these cuts can contain the outer zones of the disc (11), and suitably hold it in place.

It is preferable that the main sheet of the card (1) be provided with a front window (13) which enables one to directly see most of the disc (11), preferably with the aid of a transparent sheet (14) to protect the disc; the purpose of the window is clearly to ensure that the presence of the disc stands out at a first glance and that it does not go unnoticed to the addressee of the video-postcard.

The extension (7) to the main sheet of the postcard (1) will also be equipped with another concentric window (15) containing the disc itself (11), which will also enable the addressee to see the disc and even handle it while opening the casing (10), which will be opened by tearing, either along the folding line (8) of the main sheet of the postcard, or along the end (9) of the partitioning device or rear extension (7).

The disc (11) will have to be compatible with the software for a personal computer and with any domestic DVD system.

## Claims

1. Video-postcard, of the type that consists of a main sheet of card on the front of which there is one or more than one photograph depicting a particular place, and on the rear there is an area indicated for writing a message and the name and address of the person who is to receive the postcard; this card is **characterised by** the fact that it also contains a disc with information that is supplementary to the aforementioned photograph(s), which can be read by a personal computer or a DVD system.

2. Video-postcard, as in Claim 1, **characterised by** the fact that the main sheet of the card is extended along one of its ends and is folded back onto the rear face of the card, forming a tubular casing, open at its ends, which the disc is placed in, the latter being held in place by two oblique cuts in the rear extension to the main body of the card, into which the rim of the disc fits.

3. Video-postcard, as in the preceding claims, **characterised by** the fact that a window is provided on the front face of the tubular casing, with a transparent sheet, which enables the addressee to directly see most of the disc inside, there being another window on the back of the aforementioned casing that gives direct access to the disc.
